# EUROPEAN PATENT APPLICATION

(11) **EP 0 859 504 A1**
(43) Date of publication of application: **19.08.1998**
(21) Application number: 97300928.5
(22) Date of filing: 13.02.1997
(51) Int. Cl.: H04N 1/028, G07F 9/02

(54) **Optical scanning apparatus with folded optical path**

(71) Applicant: BRITISH TELECOMMUNICATIONS public limited company, London EC1A 7AJ (GB)
(72) Inventor: The designation of the inventor has not yet been filed

(57) **Abstract**

In a vending machine, optical scanning apparatus for providing digitised picture data fro telemetry purposes includes first and second mirrors 12, 13 mounted parallel with each other and arranged to traverse the product drop area 4 of the machine. A light sensitive element 17 collects one dimeansional digitised data defining a single raster scan of the viewed area and accumulates the data line by line to provide digitised signals defining a picture of the instaneous view of the contents of the machine. A third mirror 14 may be provided to further fold the optical path from the product compartments 2 to the camera 16 such that the entire unit can be fitted into a small space while providing a longer viewing distance.

## Description

The present invention relates to optical scanning apparatus and more particularly but not exclusively to optical scanning apparatus for use in remote viewing of objects in a confined space.

Vending machines providing confectionery, drinks, sandwiches and the like are often located remote from the suppliers premises. It is known for vending machine manufacturers to incorporate detectors which may indicate when one or more items normally stocked in a vending machine have all been purchased. Recent developments in telecommunications permit machine owners to contact their machines to retrieve data showing alarm conditions. Further, some machines include microprocessors and modems with the microprocessor being arranged to effect connection by way of the public switched telephone network (PSTN) to provide alert conditions to the machine owner. It is common practice, particularly in confectionery vending, for the machine owner to sub-contract stocking of the vending machines to another party. This can result in mis-stocking of vending machines either by using a competitors products or by placing incorrect product lines into vending machine positions accidentally. Either of these occurrences may result in loss of revenue to the machine owner.

Consequently vending machine owners may wish periodically to carry out a visual check of the contents of a vending machine partly to determine that correct stocking of the machine has occurred and partly to monitor the availability of product lines within their vending machines.

Traditional television type cameras normally used for monitoring purposes are comparatively expensive and may exceed the cost of an individual vending machine. Further, such cameras do not have a sufficient depth of field to view products stocked towards the sides of the vending machinery and use of extremely wide angled lenses result in distortion of items at the extreme edge of the machines preventing their identification.

According to the present invention there is provided an optical scanning apparatus comprising first and second mirrors mounted in a parallel relationship with reflective surfaces thereof facing each other, lens means for collecting reflective light from the first mirror and for focusing said light on light sensitive circuitry arranged to provide a digitised output in respective of a line of viewing, means for moving the scanning device with respect to an object to be viewed at a predetermined rate and means to accumulate the multiplicity of lines of digitised information to provide a complete picture of the object viewed.

Preferably the apparatus is mounted in the door area of a vending machine and is movable with respect to products held therein such that telemetric monitoring of the contents of a vending machine is possible. The scanning apparatus may include a third mirror such that the horizontal distance occupied by the optical scanning arrangement is further reduced.

An optical scanning arrangement in accordance with the invention will now be described by way of example only with reference to the accompany drawing of which;
Figure 1 is a schematic front elevation of a typical vending machine,
Figure 2 is a plan view of the machine of Figure 1 with the top removed,
Figure 3 is an enlarged plan view of the door of Figure 2 to show additional detail,
Figure 4 is a side view of the optical scanning apparatus incorporated in the machine of Figure 1, and
Figure 5 is a plan view of the mirror arrangement of Figure 4.

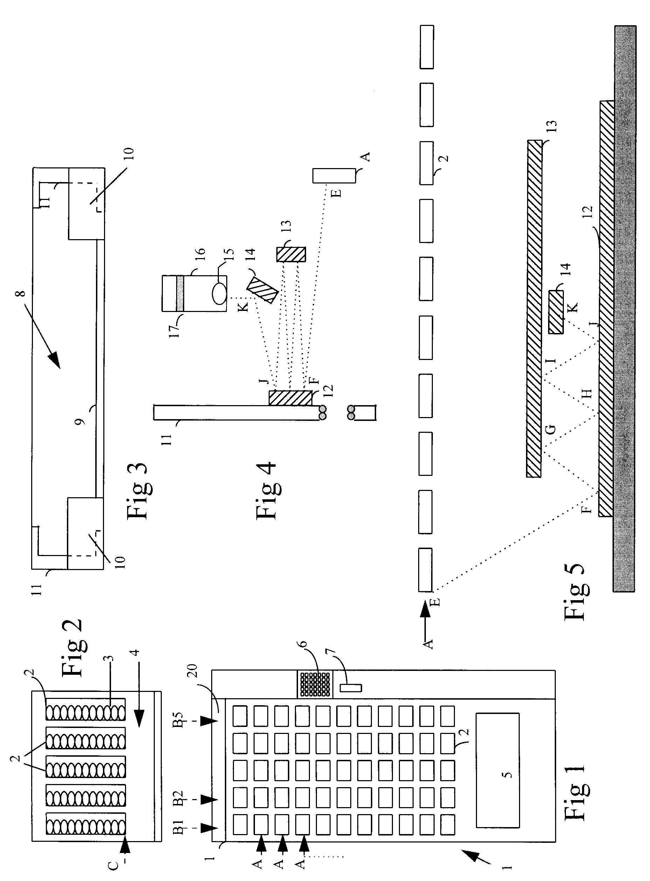

Referring first to Figures 1 and 2 a typical vending machine 1 has a number of compartments 2 arranged in rows A and columns B. Typically individual products may be held in segments of a spiral 3 which rotates to allow a single product from a selected row and column to drop through the drop area 4 at the front of the machine so that the product may be collected by the consumer from an access point 5.

Thus in use a consumer may deposit coin or coins through a coin slot 7 and may then select a product using a keypad 6. Processing means within the machine compares the value of monies inserted with the cost of an item in the selected row and column and controls driving of the spirals 3. A typical machine will be of the order of say 800 millimetres wide and may have 8-10 columns B and 6 to 10 or more rows A. The actually number of rows and columns is not relevant to the present invention.

In a typical machine having the dimensions mentioned the distance between a first column B1 and an end column B5 may be of the order of 710 millimetres. Thus in order to view all of the objects in one row A a viewing distance of approximately 600 millimetres from the front edge C of the product compartments is required to allow non distorted viewing of all of the objects. In practice the real distance between the front edge C and the machine viewing window is of the order of 180 millimetres, being the drop area 4.

Referring now also to Figure 3, the plan view of the door of the machine 5 generally indicated at 8, includes a viewing window 9 and lighting points 10. Attached to the door framework aluminium channels 11 provide a guide rail for the apparatus of the invention to travel vertically with respect to the machine.

As has been mentioned a viewing distance of 600 millimetres is required from the front edge C of the products to enable viewing of the full width of 710 millimetres. The present invention provides a small mirror 12 which is approximately 500 millimetres wide and 30 millimetres deep mounted parallel with respect to the vertical face C of the product area. This is carried on a frame (not shown) which travels in the channels 11. A second mirror 13 which is approximately 400 millimetres long by 20 millimetres deep is mounted parallel with the mirror 12 the reflecting faces of the mirrors 12 and 13 facing each other. The mirror 13 is permanently mounted to the same carrying arrangement at a distance of approximately 90 millimetres from the first mirror 12.

A third mirror 14 is mounted with respect to the mirror 12 to effect reflection of images to a vertically mounted lens and camera arrangement 15 and 16. A line scanning element 17 is provided in the camera such that a single line digitised output can be provided. The line scan element 17 may be for example a line scan integrated circuit available from Primax Electric Ltd (Trademark) the more normal use of which is for incorporation in devices for hand scanning page information into a computer. Line scan software for use with the Primax product is known such that each line scan received from the integrated circuit 17 is digitised and as the scanning apparatus moves vertically with respect to the vending machine door 8 a complete digitised picture of the contents of the rows and columns is obtained. The scanning data may be transmitted to a telecommunications network (not shown) for content monitoring in real time or the data may be stored locally within the machine pending a predetermined transmission time or remote accessing of the vending machine by the owner. Thus the line scanning arrangement of the camera 16 enables an acceptable resolution picture to be completed. Folding the optical path 18 allows the unit to be fitted into a confined space and still provide a wide field of view. Thus, using a single line of light sensors in the chip 17 which may be in the example Primax system is 1600 pixels long and incorporates red, green and blue sensing elements to provide full colour an area of 720 millimetres by 1200 millimetres representing the rows and columns of a typical machine can be covered.

Note that ny using the parallel mirror arrangement with a shallow viewing angle of approximately 3½ to four degrees a view behind the first product in a compartment2 is obtained as the view moves past the rows A. This enables a visual check of the presence that more than one item is present in a compartment.

In the arranged as described five light reflections occur resulting in a drop of light level of approximately 50%. The scanning element is capable of working to provide good pictures using the normal illumination of the lighting 10 incorporated in the vending machine door. As will be appreciated, the path E to F is approximately 180 millimetres long then each of the paths F to G, H to I and I to J is 90 millimetres long and finally the path J to K is approximately 60 millimetres long giving a virtual distance of 600 millimetres allowing full one dimensional viewing of the object width.

It will be appreciated that while as herein described the mechanism moves purely vertically with respect to the front face of the objects to be viewed it will be possible to curve the track 11 to cause tilting of the assembly so that objects below the bottom area of track could also be viewed. Note that in a telemetry arrangement a scanning instruction causing the camera to move from its normal quiescent position to carry out a vertical scan may result from a phone instruction to the machinery. The dimensions of the mirrors 12 and 13 have been selected with the proposed tilt of 3½ to 4 degrees vertical causing an inclusive angle of 7 to 8 degrees between reflections to fit the available space 4.

It will be appreciated that the camera 16 could be aligned directly with the path J K without requiring the addition of the mirror 14, particularly if lens 15 is sufficiently small to enable construction of a camera 16 capable of fitting within the drop zone 4. However it is convenient to mount the camera vertically allowing the use of a larger camera arrangement and permitting, in certain vending machines mounting of the camera arrangement 16 so that in the quiescent position the cameras and mirror arrangement are behind a top bar 20 of the vending machine 1.

While as herein described, the lighting is mounted in the top of the vending machine, it will be realised that a traveling light source may be provided, either mounted with the camera and reflected onto the area currently being scanned or mounted to travel with the assembly. Iin the arrangement shown, a light source mounted on the camera could be reflected using a half silvered mirror at the position shown for the mirror 14 so that light transmission and optical signal collection use common routes.

## Claims

1. An optical scanning apparatus comprising first and second mirrors mounted in a parallel relationship with reflective surfaces thereof facing each other, lens means for collecting reflective light from the first mirror and for focusing said light on light sensitive circuitry arranged to provide a digitised output in respective of a line of viewing, means for moving the scanning device with respect to an object to be viewed at a predetermined rate and means to accumulate the multiplicity of lines of digitised information to provide a complete picture of the object viewed.

2. Optical scanning apparatus as claimed in claim 1 mounted in the door area of a vending machine and movable with respect to products to provide data defining an instantaneous view of the contents of the machine.

3. Optical scanning apparatus as claimed in claim 1 including a third mirror to provide a deflection of the optical path so that the horizontal distance occupied by the optical scanning arrangement is further reduced.

4. Optical scanning apparatus for inclusion in a confined space and including means to provide a folded optical path between a substantially planar area and light sensing means which provides a digitised signal representing a raster scan of the planar area, the apparatus further including means to cause relative movement between the planar area and the light sensing means whereby a digitised representation of the planar area is obtained.
